# EUROPEAN PATENT SPECIFICATION

(11) **EP 4 177 120 B1**
(45) Date of publication and mention of the grant of the patent: **28.08.2024**
(21) Application number: 21207128.6
(22) Date of filing: 09.11.2021
(51) Int. Cl.: B60T 7/06, B60T 11/16, B60T 11/18, B60T 17/22, F16D 65/00

(54) **MOUNTING ASSEMBLY FOR FIXING A COMPONENT OF A VEHICLE BRAKE SYSTEM TO A VEHICLE STRUCTURE AND VEHICLE**
BEFESTIGUNGSANORDNUNG ZUR BEFESTIGUNG EINER KOMPONENTE EINER FAHRZEUGBREMSANLAGE AN EINER FAHRZEUGSTRUKTUR UND FAHRZEUG
ENSEMBLE DE MONTAGE POUR FIXER UN COMPOSANT D'UN SYSTÈME DE FREINAGE DE VÉHICULE SUR UNE STRUCTURE DE VÉHICULE ET VÉHICULE

(43) Date of publication of application: 10.05.2023
(73) Proprietor: Volvo Car Corporation, 40531 Göteborg (SE)
(72) Inventor: KAPOCS, Marcel, 40531 Göteborg (SE); RAUT, Vaibhav, 40531 Göteborg (SE); JOHANSSON, Thomas, 40531 Göteborg (SE)
(74) Representative: Maiwald GmbH

(56) References cited:
- CN-U- 201 511 950
- CN-U- 208 813 174
- CN-U- 210 941 646
- CN-U- 211 852 632
- CN-U- 213 473 099
- DE-A1- 10 039 808
- JP-A- 2017 016 401
- US-A- 4 130 027
- US-A- 5 829 317
- US-B1- 7 051 643

## Description

The present invention relates to a mounting assembly for fixing a component of a vehicle brake system to a vehicle structure.

Moreover, the present invention is directed to a vehicle having such a mounting assembly and a vehicle brake system.

It is known that components of vehicle brake systems generate noise and vibration when being operated. This is especially the case for brake boosters.

For this reason, usually absorber means are provided in the surroundings of components of vehicle brake systems and especially in the surroundings of brake boosters. These absorber means serve the purpose of attenuating the noise and vibration such that the comfort of the passengers inside the vehicle is not disturbed. In other words, the passenger compartment is isolated from the components of the vehicle brake systems as far as noise and vibrations are concerned.

However, the absorber means are costly both in terms of material costs and in terms of labor cost since they need to be installed in the vehicle.

Beyond that, a mounting assembly for fixing a component of a vehicle brake system to a vehicle structure according to the preamble of claim 1 is known from US 7 051 643 B1. Further mounding assemblies for fixing a component of a vehicle brake system are known from JP 2017 016401 A, CN 2015 11950 U, US 4 130 027 A and US 5 829 317 A. A mounting assembly for fixing a component of a stability control module is known from CN 210 941 646 U.

An objective of the present invention is therefore to provide a solution for attenuating noise and vibrations being generated during the operation of a component of a vehicle brake system, the solution being cost-efficient while maintaining a high level of effectiveness.

The problem is at least partially solved or alleviated by the subject matter of the independent claims of the present invention, wherein further examples are incorporated in the dependent claims.

According to a first aspect, there is provided a mounting assembly for fixing a component of a vehicle brake system to a vehicle structure, the mounting assembly comprises a mounting portion of the vehicle structure having a through hole and a mounting element of the vehicle brake system having a through hole. A bolt extends through the through hole of the mounting portion and through the through hole of the mounting element. The bolt has a bolt head on a first end thereof. Moreover, a nut engages the bolt at a second end portion thereof which is opposed to the first end, wherein the mounting portion is attached to the mounting element via the bolt and the nut. Additionally, an elastic bushing is provided having a bushing body which is arranged in the through hole of the mounting portion or in the through hole of the mounting element. The elastic bushing further has a first bushing collar extending from the bushing body in a radial direction. The first bushing collar extends on a first axial side of the corresponding mounting portion or mounting element. In the present context, the corresponding mounting portion or mounting element is the mounting portion or mounting element having the through hole in which the bushing body of the elastic bushing is arranged. The first axial side is defined with respect to a middle axis of the through hole in which the bushing body is arranged. The first bushing collar may for example be interposed between the mounting portion and the mounting element. Since the bushing is elastic, it provides attenuation or dampening as far as noise and vibration are concerned. This is especially the case for the first bushing collar. If it is interposed between the mounting portion and the mounting element, noise and vibration are hindered from being transferred between these elements. Moreover, the bushing can be sourced on the market at comparatively low cost. This is especially the case when considering the usual mass production in the automotive industry. Additionally, the bushing is easy to install during the mounting of the components of the vehicle brake system. Consequently, the mounting assembly according to the present invention offers a cost-efficient solution for dampening noise and/or vibrations.

Additionally, the bushing circumferentially surrounds the bolt. Put otherwise, the bolt extends through the elastic bushing. This especially applies to the bushing body. This configuration is very compact. Thus, the mounting assembly is suitable for being installed in restraint spaces of the vehicle.

Further according to the invention, the mounting assembly may comprise a rigid bushing having a bushing body extending through the same through hole as the elastic bushing. The rigid bushing has a radially protruding bushing collar being arranged at an axial end of the bushing body. The bushing collar of the rigid bushing is arranged outside the elastic bushing. Such a rigid bushing can be used for compressing the elastic bushing in a defined and at least locally substantially uniform manner. This way, an attenuation characteristic of the elastic bushing can be set. Moreover, through the rigid bushing, vibrations can be fed into the elastic bushing in order to be attenuated.

The elastic bushing can have a second bushing collar extending from the bushing body in a radial direction, the second bushing collar being arranged at an end of the bushing body being opposed to the end at which the first bushing collar is provided. In other words, the bushing has a bushing collar at both of its ends. This means that if the bushing is provided in the through hole of the mounting portion, an elastic bushing collar is provided at both sides of the mounting portion. If the bushing is provided in the through hole of the mounting element, an elastic bushing collar is provided at both sides thereof. In both cases this leads to an effective attenuation of noise and vibration being generated by the operation of the component of the vehicle brake system.

The second collar may be interposed between the nut and the mounting portion or the mounting element along an axial direction of the elastic bushing. As a consequence of this configuration, noise and or vibration can only be transferred to the nut and the bolt cooperating therewith in a dampened manner. This further hinders noise and vibration from reaching a passenger compartment.

The elastic bushing may be an integral structure. In other words, the elastic bushing may be designed as one piece. This renders the bushing design simple. Moreover, such a bushing can be installed easily within the mounting assembly.

The bolt may also extend through the rigid bushing. Again, such a configuration is very compact. Furthermore, the bolt can be used to compress the elastic bushing via the rigid bushing in a defined manner.

The collar of the rigid bushing may be interposed between the nut and the elastic bushing. Consequently, the rigid bushing occupies a very restraint space only.

An end of the rigid bushing being opposed to the collar of the rigid bushing may abut against the mounting portion or the mounting element. Consequently, the rigid bushing can be easily arranged in a defined position. Thus, the mounting portion or the mounting element against which the bushing abuts serves for positioning the rigid bushing. Of course, the rigid bushing being arranged in a defined position can serve for positioning further elements of the mounting assembly.

The mounting assembly may additionally comprise a stopper member having a through hole through which the bolt extends. The stopper member abuts against the nut and has at least one abutment leg being configured for abutting against the mounting portion or the mounting element. Thus, the stopper member is secured within the mounting assembly by the bolt and the nut. The abutment leg can be used for limiting a relative movement of the parts of the mounting assembly with respect to each other.

In a neutral state of the mounting assembly, a clearance may be provided between an end of the abutment leg and the mounting portion or the mounting element. In this context, a neutral state of the mounting assembly is to be understood as a state, in which neither noise nor vibration results from the component of the vehicle brake system. This means that the elastic bushing is not deformed beyond the deformation resulting from its mounting within the mounting assembly. The clearance, thus, defines a range of movement within the mounting assembly being available for further elastic deformation of the elastic bushing. More precisely, the clearance defines a range of relative movement between the mounting portion and the mounting element.

Moreover, a dampening material may be arranged in an abutment area of the mounting portion or the mounting element, the abutment area being configured for contacting the abutment leg. Thus, in a case in which the abutment leg contacts the abutment area, particularly no noise and/or vibrations are generated. This further enhances the comfort of the vehicle's passengers.

In a variant, the stopper member may be formed as a portion of the rigid bushing. In other words, the stopper member and the rigid bushing are realized as a single part. This leads to a very simple design of the mounting assembly. Moreover, the assembly of the mounting assembly is facilitated since only one part, i.e. the part being both the stopper member and the rigid bushing, needs to be mounted instead of two parts, i.e. the stopper member and the rigid bushing.

On the mounting portion and/or on the mounting element an extension space may be provided radially adjacent to the first bushing collar and/or the second bushing collar of the elastic bushing such that the first bushing collar and/or the second bushing collar can extend into the extension space when being deformed. Consequently, the elastic bushing can freely deform into the extension space. In other words, the deformation of the elastic bushing is not hindered by geometric restraints. Vibration and noise can thus be attenuated in a reliable manner.

According to a second aspect, there is provided a vehicle comprising a mounting assembly according to the present invention and a vehicle brake system. A component of the vehicle brake system is fixed to a structure of the vehicle via the mounting assembly. Consequently, noise and vibration resulting from the operation of the component of the vehicle brake system is effectively attenuated in a cost-effective manner.

In an example, the component of the vehicle brake system is a brake booster.

It should be noted that the above examples may be combined with each other irrespective of the aspect involved.

These and other aspects of the present invention will become apparent from and elucidated with reference to the examples described hereinafter.

Examples of the invention will be described in the following with reference to the following drawings:
- Fig. 1: shows a vehicle according to the present invention comprising a mounting assembly according to a first example of the present invention,
- Fig. 2: shows a sub-assembly of the vehicle of Fig. 1 comprising the mounting assembly in a perspective view,
- Fig. 3: shows the mounting assembly along a direction indicated by arrow III in Figure 2, wherein remaining components of the sub-assembly of Figure 2 are not shown,
- Fig. 4: shows a sectional view along plane IV-IV in Figure 3,
- Fig. 5: shows a view corresponding to the view of Fig. 3 comprising a mounting assembly according to a second example of the present invention, and
- Fig. 6: shows a sectional view along plane VI-VI in Fig. 5.

The figures are merely schematic representations and serve only to illustrate examples of the invention. Identical or equivalent elements are in principle provided with the same reference signs.

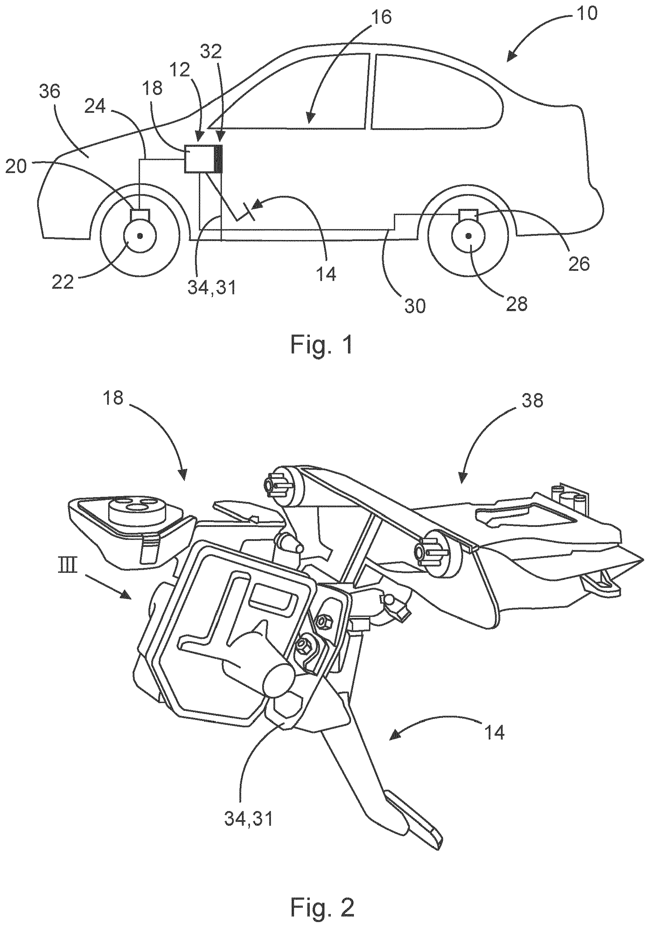

Figure 1 shows a vehicle 10 having a vehicle brake system 12 being represented in a schematical manner.

The vehicle brake system 12 comprises a pedal unit 14 reaching into a passenger compartment 16 of the vehicle 10.

Furthermore, the vehicle brake system 12 has a component 18 being a brake booster which is operationally connected to the pedal unit 14.

For the ease of explanation, the component of the vehicle brake system and the brake booster will both be designated with reference sign 18.

Moreover, an exemplary front brake caliper 20 being adapted for interacting with a front brake disc 22 is connected to the brake booster 18 via an exemplary first brake line 24.

An exemplary rear brake caliper 26 is adapted for interacting with a rear brake disc 28. The rear brake caliper 26 is connected to the brake booster 18 by an exemplary second brake line 30.

The brake booster 18 is fixed to the structure 31 of the vehicle 10 by a mounting assembly 32. More precisely, the brake booster 18 is fixed to a separation wall 34 separating a motor compartment 36 from the passenger compartment 16. Sometimes such a separation wall 34 is designated a firewall. The separation wall 34 obviously forms part of the structure 31 the vehicle 10.

In Figure 2 the brake booster 18 and the pedal unit 14 are shown in more detail. Also the separation wall 34 is visible. Additionally, a dash panel carrier 38 is represented which is also affixed to the separation wall 34.

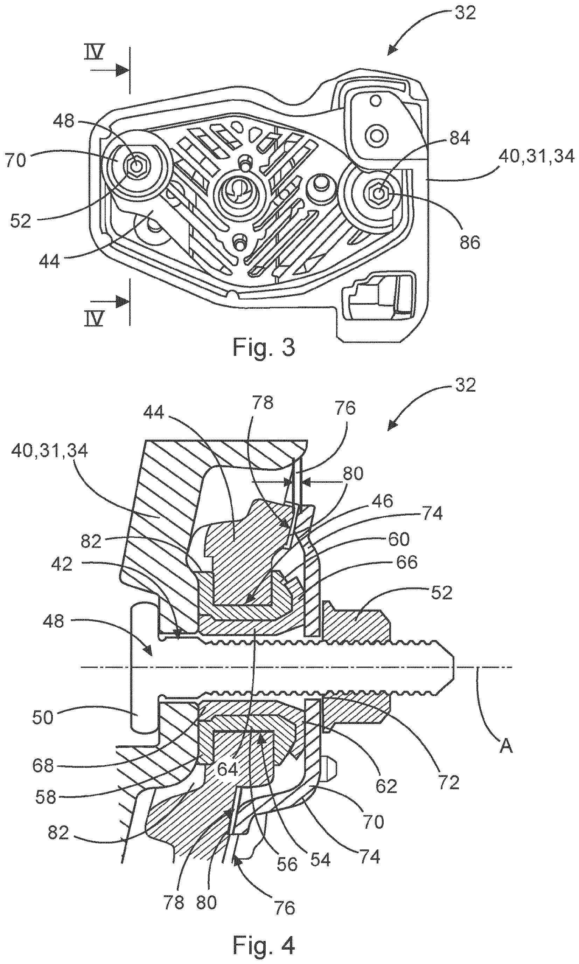

A first example of the mounting assembly 32 will now be explained with reference to Figures 3 and 4. In these figures the brake booster 18 is not represented in order to enhance the visibility of the parts of the mounting assembly 32.

The mounting assembly 32 comprises a mounting portion 40 of the vehicle structure 31. In the present example the mounting portion 40 is a plate-shaped portion of the separation wall 34.

The mounting portion 40 has a through hole 42 (cf. Figure 4).

Furthermore, the mounting assembly 32 comprises a mounting element 44 of the vehicle brake system 12. In the present example, the mounting element 44 is a substantially plate-shaped mounting element 44 of the brake booster 18.

Also the mounting element 44 has a through hole 46.

Moreover, a bolt 48 is provided which extends through both through holes 42, 46.

The bolt 48 has a bolt head 50 at a first end thereof.

In the present example, the bolt head 50 abuts against the mounting portion 40 on a side being opposite the mounting element 44.

At a second end portion of the bolt 48, which is arranged opposite the first end, and nut 52 is screwed on the bolt 48. This means that an external thread of the bolt 48 engages an internal thread of the nut 50.

Furthermore, and elastic bushing 54 is provided.

The elastic bushing 54 has a bushing body 56 which extends through the through hole 46 of the mounting element 44.

More precisely, the bushing body 56 radially lies against the cylindrical surface forming the circumference of the through hole 46.

The elastic bushing 54 has a first bushing collar 58 extending from the bushing body 56 in a radial direction.

The first bushing collar 58 lies against a rim of the through hole 46. Moreover, the first bushing collar 58 is interposed between the mounting portion 40 and the mounting element 44.

The elastic bushing 54 also has a second bushing collar 60 extending from the bushing body 56 in a radial direction.

The second bushing collar 60 is located at an opposite end of the bushing body 56 as compared to the first bushing collar 58.

The second bushing collar 60 also lies against a rim of the through hole 46. However, the rim against which the second bushing collar 60 lies is arranged on an opposite side as compared to the rim against which the first bushing collar 58 lies.

Beyond that, the second bushing collar 60 is interposed between the nut 52 and the mounting element 44 along an axial direction A of the elastic bushing 54 corresponding to an axial direction of the through holes 42, 46.

The elastic bushing 54, i.e. the bushing body 56, the first bushing collar 58 and the second bushing collar 60, are formed in one piece.

The mounting assembly 32 further comprises a rigid bushing 62.

Also the rigid bushing 62 has a bushing body 64.

The bushing body 64 extends through the through hole 46 of the mounting element 44 radially inside the elastic bushing 54.

Moreover, the rigid bushing 62 has a radially protruding bushing collar 66 being arranged at an end of the bushing body 64.

The bushing collar 66 of the rigid bushing 62 is arranged axially outside the second bushing collar 60 of the elastic bushing 54.

The bushing collar 66 axially lies against the second bushing collar 60.

Consequently, the bushing collar 66 of the rigid bushing 62 is interposed between the nut 52 and the elastic bushing 54, more precisely its second bushing collar 60.

Moreover, the rigid bushing 62 is arranged within the mounting assembly 32, such that an end 68 thereof being arranged opposite the bushing collar 66 abuts against the mounting portion 40.

The bolt 48 extends through the center of the rigid bushing 62.

Since the rigid bushing 62 is arranged at least partially radially inside the elastic bushing 54, the bolt 48 also extends through the elastic bushing 54.

The mounting assembly 32 additionally comprises a stopper member 70 being generally shaped in the form of half-shell and having a through hole 72 through which the bolt 48 extends.

On a first side, the stopper member 70 abuts against the nut 52.

On a second, opposing side, the stopper member 70 abuts against the bushing collar 66 of the rigid bushing 62.

Thus, a central portion of the stopper member 70 is interposed between the nut 52 and the rigid bushing 62.

The stopper member also has an abutment leg 74 which is configured for abutting against the mounting element 44.

In the present example, the abutment leg has a substantially circular shape when considering a middle axis A of the through hole 72 as a center. However, the axial length of the abutment leg 74 differs from its circumference.

In order to provide a defined range of motion of the mounting element 44, a clearance 76 is provided between an end of the abutment leg 74 and an abutment area 78 of the mounting element 44. This, of course, is only the case in a neutral state of the mounting assembly 32 which is shown in Figures 3 and 4.

In order to render a potential contact between the abutment leg 74 and the mounting element 44 soft, a dampening material 80 is arranged on the abutment area 78.

The mounting portion 40 is, thus, attached to the mounting element 44 by means of the bolt 48, the elastic bushing 54, the rigid bushing 62, the stopper member 70 and the nut 52.

Thereby, the rigid bushing 62 and the stopper member 70 are rigidly fixed to the mounting portion 40 by the bolt 48 and the nut 52. This is due to the fact that the end 68 of the rigid bushing 62 rigidly abuts against the mounting portion 40 and the stopper member 70 is held rigidly against the rigid bushing 62 by the nut 52.

Moreover, the elastic bushing 54 is compressed in a defined manner if the rigid bushing 62 is mounted on the mounting portion 40 such that the end 68 of the rigid bushing abuts against the mounting portion 40. A dimension of an axial space being available for the elastic bushing 54 in the mounted condition, thus, corresponds to a distance between the end 68 of the rigid bushing 62 and its bushing collar 66.

However, the mounting element 44 is able to move in a first axial direction with respect to the mounting portion 40 by compressing the first bushing collar 58.

Additionally, the mounting element 44 can move in a second axial direction with respect to the mounting portion 40 by physically compressing the second bushing cover 60. However, the range of movement in the second axial direction is limited by the size of the clearance 76. Once the clearance 76 is overcome, the mounting element 44 abuts against the stopper member 70.

Moreover, the mounting element 44 is able to move in a radial direction by deforming the bushing body 56.

In order not to geometrically limit the elastic deformation of the elastic bushing 54, an extension space 82 is provided radially adjacent to the first bushing collar 58 such that the latter can extend into the extension space 82 when being deformed.

In the present example, the extension space 82 is a geometrical feature of the mounting element 44.

During operation of the brake booster 18, such movements of the mounting element 44 will be generated as parts of vibrations. Due to the above-explained deformation of the elastic bushing 54, these vibrations are not transferred to the mounting portion 40 or are at least attenuated before being transferred to the mounting portion 40.

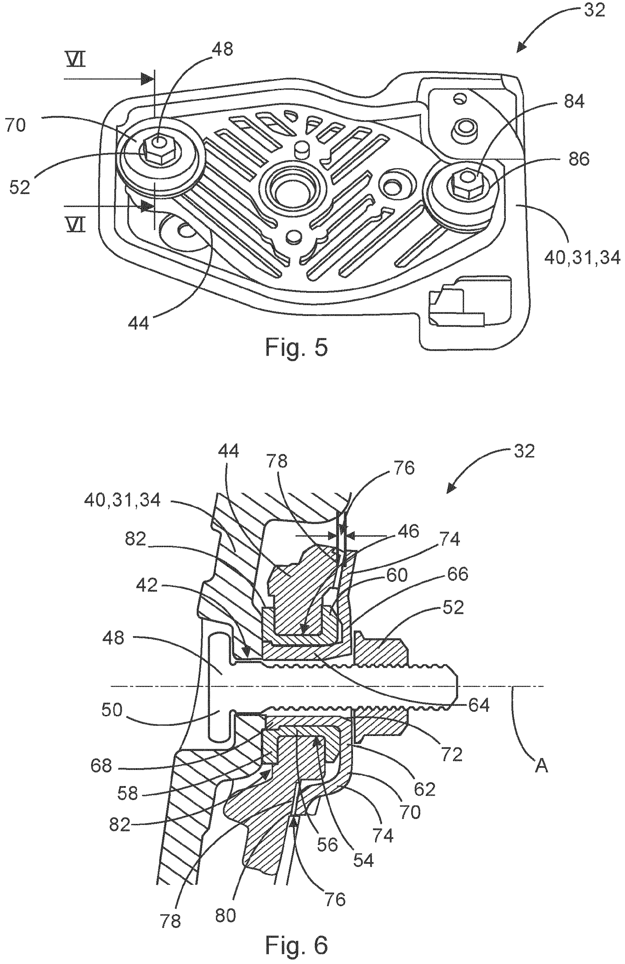

A second example of the mounting assembly 32 will now be explained with reference to Figures 5 and 6. Again, in these figures the brake booster 18 is not represented in order to enhance the visibility of the parts of the mounting assembly 32.

The mounting assembly 32 according to the second example only differs from the mounting assembly 32 of the first example in that the stopper member 70 is formed as a portion of the rigid bushing 62. In other words, the stopper member 70 and the rigid bushing 62 are formed as one part.

In the second example, one can imagine the stopper member 70 and its abutment leg 74 being formed by prolonging the bushing collar 66 of the rigid bushing 62.

Beyond that, reference is made to the explanations given in respect of the first example.

It is noted that in the first example and the second example, the mounting element 44 is not only mounted on the mounting portion 40 via the bolt 48 and the nut 52 as has been explained before. In both examples a second bolt 84 and a second nut 86 are provided.

However, in both examples, the fixation of the mounting element 44 on the mounting portion 40 via the second bolt 84 and the second nut 86 is realized in the same manner as the fixation via the bolt 48 and the nut 52. Thus, reference can be made to the above explanations.

In other words, the representations shown in Figures 4 and 6 also show the fixation via the respective second bolt 84 and the respective second nut 86.

It is additionally understood that the mounting assembly 32 as explained above could be kinematically inverted without departing from the general idea underlying the present invention. This means that the elastic bushing 54 and the rigid bushing 62 could as well be arranged in the through hole 42 of the mounting portion 40 and the bolt head 50 could abut against the mounting element 44.

Other variations to the disclosed examples can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 10: vehicle
- 12: vehicle brake system
- 14: pedal unit
- 16: passenger compartment
- 18: component of the vehicle brake system
- 20: front brake caliper
- 22: front brake disk
- 24: first brake line
- 26: rear brake caliper
- 28: rear brake disk
- 30: second brake line
- 31: vehicle structure
- 32: mounting assembly
- 34: separation wall
- 36: motor compartment
- 38: dash panel carrier
- 40: mounting portion
- 42: trough hole
- 44: mounting element
- 46: through hole
- 48: bolt
- 50: bolt head
- 52: nut
- 54: elastic bushing
- 56: bushing body
- 58: first bushing collar
- 60: second bushing collar
- 62: rigid bushing
- 64: bushing body
- 66: bushing collar
- 68: end
- 70: stopper member
- 72: through hole
- 74: abutment leg
- 76: clearance
- 78: abutment area
- 80: dampening material
- 82: extension space
- 84: second bolt
- 86: second nut

## Claims

1. A mounting assembly (32) for fixing a component (18) of a vehicle brake system (12) to a vehicle structure (31), the mounting assembly (32) comprising:
a mounting portion (40) of the vehicle structure (31) having a through hole (42),
a mounting element (44) of the vehicle brake system (12) having a through hole (46),
a bolt (48) extending through the through hole (42) of the mounting portion (40) and the through hole (46) of the mounting element (44), the bolt (48) having a bolt head (50) on a first end thereof,
a nut (52) engaging the bolt (48) at a second end portion thereof which is opposed to the first end, wherein the mounting portion (40) is attached to the mounting element (44) via the bolt (48) and the nut (52),
an elastic bushing (54) having a bushing body (56) which is arranged in the through hole (42) of the mounting portion (40) or in the through hole (46) of the mounting element (44), and a first bushing collar (58) extending from the bushing body (56) in a radial direction, the first bushing collar (58) extending on a first axial side of the corresponding mounting portion (40) or mounting element (44), wherein the elastic bushing (54) circumferentially surrounds the bolt (48),
**characterized in that** the first bushing collar (58) is interposed between the mounting portion (40) and the mounting element (44),
wherein the mounting assembly (32) further comprises a rigid bushing (62) having a bushing body (64) extending through the same through hole (42, 46) as the elastic bushing (54) and a radially protruding bushing collar (66) being arranged at an axial end of the bushing body (64), the bushing collar (66) of the rigid bushing (62) being arranged outside the elastic bushing (54).

2. The mounting assembly (32) according to claim 1, wherein the elastic bushing (54) has a second bushing collar (60) extending from the bushing body (56) in a radial direction, SE:TOP
the second bushing collar (60) being arranged at an end of the bushing body (56) being opposed to the end at which the first bushing collar (58) is provided.

3. The mounting assembly (32) according to claim 2, wherein the second bushing collar (60) is interposed between the nut (52) and the mounting portion (40) or the mounting element (44) along an axial direction of the elastic bushing (54).

4. The mounting assembly (32) according to any one of the preceding claims, wherein the elastic bushing (54) is an integral structure.

5. The mounting assembly (32) according to any one of the preceding claims, wherein the bolt (48) extends through the rigid bushing (62).

6. The mounting assembly (32) according to any one of the preceding claims, wherein the collar (66) of the rigid bushing (62) is interposed between the nut (52) and the elastic bushing (54).

7. The mounting assembly (32) according to any one of the preceding claims, wherein an end (68) of the rigid bushing (62) being opposed to the collar (66) of the rigid bushing (62) abuts against the mounting portion (40) or the mounting element (44).

8. The mounting assembly (32) according to any one of the preceding claims, comprising a stopper member (70) having a through hole (72) through which the bolt (48) extends, the stopper member (70) abutting against the nut (52) and having at least one abutment leg (74) being configured for abutting against the mounting portion (40) or the mounting element (44).

9. The mounting assembly (32) according to claim 8, wherein in a neutral state of the mounting assembly (32), a clearance (76) is provided between an end of the abutment leg (74) and the mounting portion (40) or the mounting element (44).

10. The mounting assembly (32) according to claim 8 or 9, wherein a dampening material (80) is arranged in an abutment area (78) of the mounting portion (40) or the mounting element (44), the abutment area (78) being configured for contacting the abutment leg (74).

11. The mounting assembly (32) according to any one of claims 8 to 10, wherein the stopper member (70) is formed as a portion of the rigid bushing (62).

12. The mounting assembly (32) according to any one of the preceding claims, wherein on the mounting portion (40) and/or on the mounting element (44) an extension space (82) is provided radially adjacent to the first bushing collar (58) and/or the second bushing collar (60) of the elastic bushing (54) such that the first bushing collar (58) and/or the second bushing collar (60) can extend into the extension space (82) when being deformed.

13. A vehicle (10) comprising a mounting assembly (32) according to any one of the preceding claims and a vehicle brake system (12), **characterized in that** a component (18) of the vehicle brake system (12) is fixed to a structure of the vehicle (10) via the mounting assembly (32).

## Patentansprüche

1. Montageanordnung (32) zum Befestigen einer Komponente (18) einer Fahrzeugbremsanlage (12) an einer Fahrzeugstruktur (31), wobei die Montageanordnung (32) umfasst:
einen Montageabschnitt (40) der Fahrzeugstruktur (31), der ein Durchgangsloch (42) aufweist,
ein Montageelement (44) der Fahrzeugbremsanlage (12), das ein Durchgangsloch (46) aufweist,
einen Bolzen (48), der sich durch das Durchgangsloch (42) des Montageabschnitts (40) und das Durchgangsloch (46) des Montageelements (44) erstreckt, wobei der Bolzen (48) an einem ersten Ende einen Bolzenkopf (50) aufweist,
eine Mutter (52), die den Bolzen (48) an einem zweiten Endabschnitt, der dem ersten Ende gegenüberliegt, in Eingriff nimmt, wobei der Montageabschnitt (40) über den Bolzen (48) und die Mutter (52) an dem Montageelement (44) angebracht ist,
eine elastische Buchse (54), die einen Buchsenkörper (56) aufweist, der in dem Durchgangsloch (42) des Montageabschnitts (40) oder in dem Durchgangsloch (46) des Montageelements (44) angeordnet ist, und einen ersten Buchsenbund (58) aufweist, der sich von dem Buchsenkörper (56) in einer radialen Richtung erstreckt, wobei sich der erste Buchsenbund (58) auf einer ersten axialen Seite des entsprechenden Montageabschnitts (40) oder Montageelements (44) erstreckt, wobei die elastische Buchse (54) den Bolzen (48) umfänglich umgibt,
**dadurch gekennzeichnet, dass** der erste Buchsenbund (58) zwischen dem Montageabschnitt (40) und dem Montageelement (44) angeordnet ist,
wobei die Montageanordnung (32) des Weiteren eine starre Buchse (62) umfasst, die einen Buchsenkörper (64) aufweist, der sich durch dasselbe Durchgangsloch (42, 46) wie die elastische Buchse (54) erstreckt, und einen radial vorstehenden Buchsenbund (66) aufweist, der an einem axialen Ende des Buchsenkörpers (64) angeordnet ist, wobei der Buchsenbund (66) der starren Buchse (62) außerhalb der elastischen Buchse (54) angeordnet ist.

2. Montageanordnung (32) nach Anspruch 1, wobei die elastische Buchse (54) einen zweiten Buchsenbund (60) aufweist, der sich von dem Buchsenkörper (56) in einer radialen Richtung erstreckt,
wobei der zweite Buchsenbund (60) an einem Ende des Buchsenkörpers (56) angeordnet ist, das dem Ende, an dem der erste Buchsenbund (58) angeordnet ist, gegenüberliegt.

3. Montageanordnung (32) nach Anspruch 2, wobei der zweite Buchsenbund (60) zwischen der Mutter (52) und dem Montageabschnitt (40) oder dem Montageelement (44) entlang einer axialen Richtung der elastischen Buchse (54) angeordnet ist.

4. Montageanordnung (32) nach einem der vorangehenden Ansprüche, wobei die elastische Buchse (54) eine integrale Struktur ist.

5. Montageanordnung (32) nach einem der vorangehenden Ansprüche, wobei sich der Bolzen (48) durch die starre Buchse (62) erstreckt.

6. Montageanordnung (32) nach einem der vorangehenden Ansprüche, wobei der Bund (66) der starren Buchse (62) zwischen der Mutter (52) und der elastischen Buchse (54) angeordnet ist.

7. Montageanordnung (32) nach einem der vorangehenden Ansprüche, wobei ein Ende (68) der starren Buchse (62), das dem Bund (66) der starren Buchse (62) gegenüberliegt, an dem Montageabschnitt (40) oder dem Montageelement (44) anliegt.

8. Montageanordnung (32) nach einem der vorangehenden Ansprüche, umfassend ein Endanschlagelement (70), das ein Durchgangsloch (72) aufweist, durch das sich der Bolzen (48) erstreckt, wobei das Endanschlagelement (70) an der Mutter (52) anliegt und mindestens einen Endanschlagschenkel (74) aufweist, der dafür eingerichtet ist, an dem Montageabschnitt (40) oder dem Montageelement (44) anzuliegen.

9. Montageanordnung (32) nach Anspruch 8, wobei sich in einem neutralen Zustand der Montageanordnung (32) ein Freiraum (76) zwischen einem Ende des Endanschlagschenkels (74) und dem Montageabschnitt (40) oder dem Montageelement (44) befindet.

10. Montageanordnung (32) nach Anspruch 8 oder 9, wobei in einem Endanschlagbereich (78) des Montageabschnitts (40) oder des Montageelements (44) ein Dämpfungsmaterial (80) angeordnet ist, wobei der Endanschlagbereich (78) zum Kontaktieren des Endanschlagschenkels (74) ausgebildet ist.

11. Montageanordnung (32) nach einem der Ansprüche 8 bis 10, wobei das Endanschlagelement (70) als ein Abschnitt der starren Buchse (62) ausgebildet ist.

12. Montageanordnung (32) nach einem der vorangehenden Ansprüche, wobei an dem Montageabschnitt (40) und/oder an dem Montageelement (44) ein Erweiterungsraum (82) radial neben dem ersten Buchsenbund (58) und/oder dem zweiten Buchsenbund (60) der elastischen Buchse (54) so angeordnet ist, dass sich der erste Buchsenbund (58) und/oder der zweite Buchsenbund (60) bei Verformung in den Erweiterungsraum (82) hinein erstrecken können.

13. Fahrzeug (10), umfassend eine Montageanordnung (32) nach einem der vorangehenden Ansprüche und eine Fahrzeugbremsanlage (12), **dadurch gekennzeichnet, dass** eine Komponente (18) der Fahrzeugbremsanlage (12) über die Montageanordnung (32) an einer Struktur des Fahrzeugs (10) befestigt ist.

## Revendications

1. Ensemble de montage (32) pour fixer un composant (18) d'un système de freinage de véhicule (12) à une structure de véhicule (31), l'ensemble de montage (32) comprenant :
une partie de montage (40) de la structure de véhicule (31) comportant un trou traversant (42),
un élément de montage (44) du système de freinage de véhicule (12) comportant un trou traversant (46), un boulon (48) s'étendant à travers le trou traversant (42) de la partie de montage (40) et le trou traversant (46) de l'élément de montage (44), le boulon (48) ayant une tête de boulon (50) sur une première extrémité de celui-ci,
un écrou (52) venant en prise avec le boulon (48) au niveau d'une seconde partie d'extrémité de celui-ci qui est opposée à la première extrémité, dans lequel la partie de montage (40) est fixée à l'élément de montage (44) par l'intermédiaire du boulon (48) et de l'écrou (52),
une bague élastique (54) comportant un corps de bague (56) qui est disposé dans le trou traversant (42) de la partie de montage (40) ou dans le trou traversant (46) de l'élément de montage (44), et un premier collier de bague (58) s'étendant à partir du corps de bague (56) dans une direction radiale, le premier collier de bague (58) s'étendant sur un premier côté axial de la partie de montage (40) ou de l'élément de montage (44) correspondant, dans lequel la bague élastique (54) entoure circonférentiellement le boulon (48),
**caractérisé en ce que** le premier collier de bague (58) est interposé entre la partie de montage (40) et l'élément de montage (44),
dans lequel l'ensemble de montage (32) comprend en outre une bague rigide (62) ayant un corps de bague (64) s'étendant à travers le même trou traversant (42, 46) que la bague élastique (54) et un collier de bague faisant saillie radialement (66) disposé au niveau d'une extrémité axiale du corps de bague (64), le collier de bague (66) de la bague rigide (62) étant disposé à l'extérieur de la bague élastique (54).

2. Ensemble de montage (32) selon la revendication 1, dans lequel la bague élastique (54) a un second collier de bague (60) s'étendant à partir du corps de bague (56) dans une direction radiale, le second collier de bague (60) étant disposé au niveau d'une extrémité du corps de bague (56) qui est opposée à l'extrémité au niveau de laquelle le premier collier de bague (58) est situé.

3. Ensemble de montage (32) selon la revendication 2, dans lequel le second collier de bague (60) est interposé entre l'écrou (52) et la partie de montage (40) ou l'élément de montage (44) le long d'une direction axiale de la bague élastique (54).

4. Ensemble de montage (32) selon l'une quelconque des revendications précédentes, dans lequel la bague élastique (54) est une structure intégrée.

5. Ensemble de montage (32) selon l'une quelconque des revendications précédentes, dans lequel le boulon (48) s'étend à travers la bague rigide (62).

6. Ensemble de montage (32) selon l'une quelconque des revendications précédentes, dans lequel le collier (66) de la bague rigide (62) est interposé entre l'écrou (52) et la bague élastique (54).

7. Ensemble de montage (32) selon l'une quelconque des revendications précédentes, dans lequel une extrémité (68) de la bague rigide (62) qui est opposée au collier (66) de la bague rigide (62) vient en butée contre la partie de montage (40) ou l'élément de montage (44).

8. Ensemble de montage (32) selon l'une quelconque des revendications précédentes, comprenant un élément de butée (70) ayant un trou traversant (72) à travers lequel le boulon (48) s'étend, l'élément de butée (70) venant en butée contre l'écrou (52) et comportant au moins un pied de butée (74) qui est configuré pour venir en butée contre la partie de montage (40) ou l'élément de montage (44).

9. Ensemble de montage (32) selon la revendication 8, dans lequel dans un état neutre de l'ensemble de montage (32), un jeu (76) est ménagé entre une extrémité du pied de butée (74) et la partie de montage (40) ou l'élément de montage (44) .

10. Ensemble de montage (32) selon la revendication 8 ou 9, dans lequel un matériau amortisseur (80) est disposé dans une zone de butée (78) de la partie de montage (40) ou de l'élément de montage (44), la zone de butée (78) étant configurée pour entrer en contact avec le pied de butée (74) .

11. Ensemble de montage (32) selon l'une quelconque des revendications 8 à 10, dans lequel l'élément de butée (70) est formé en tant que partie de la bague rigide (62).

12. Ensemble de montage (32) selon l'une quelconque des revendications précédentes, dans lequel sur la partie de montage (40) et/ou sur l'élément de montage (44), un espace d'extension (82) est prévu radialement adjacent au premier collier de bague (58) et/ou au second collier de bague (60) de la bague élastique (54) de telle sorte que le premier collier de bague (58) et/ou le second collier de bague (60) peuvent s'étendre dans l'espace d'extension (82) lorsqu'ils sont déformés.

13. Véhicule (10) comprenant un ensemble de montage (32) selon l'une quelconque des revendications précédentes et un système de freinage de véhicule (12), **caractérisé en ce qu'**un composant (18) du système de freinage de véhicule (12) est fixé à une structure du véhicule (10) par l'intermédiaire de l'ensemble de montage (32).
